(19) Europäisches Patentamt
European Patent Office
Office européen des brevets

(11) **EP 3 217 806 B1**

(12) **EUROPEAN PATENT SPECIFICATION**

(45) Date of publication and mention of the grant of the patent:
**02.02.2022 Bulletin 2022/05**

(21) Application number: **15790138.0**

(22) Date of filing: **04.11.2015**

(51) International Patent Classification (IPC):
**A23G 9/32** *(2006.01)*   **A23G 9/34** *(2006.01)*
**A23G 9/52** *(2006.01)*

(52) Cooperative Patent Classification (CPC):
**A23G 9/34; A23G 9/327; A23G 9/52**

(86) International application number:
**PCT/EP2015/075745**

(87) International publication number:
**WO 2016/075017 (19.05.2016 Gazette 2016/20)**

(54) **COMPOSITION FOR PREPARING A FROZEN CONFECTION**

FLÜSSIGE ZUSAMMENSETZUNG ZUR HERSTELLUNG EINES GEFRORENEN KONFEKTS

COMPOSITION LIQUIDE POUR LA PRÉPARATION D'UNE CONFISERIE CONGELÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2014 EP 14193058**

(43) Date of publication of application:
**20.09.2017 Bulletin 2017/38**

(73) Proprietor: **Unilever IP Holdings B.V.**
**3013 AL Rotterdam (NL)**

(72) Inventors:
• **JUDGE, David John**
**Bedford**
**Bedfordshire MK44 1LQ (GB)**
• **KNIGHT, Penelope Eileen**
**Bedford**
**BedfordshireMK44 1LQ (GB)**
• **WIX, Loyd**
**Bedford**
**Bedfordshire MK44 1LQ (GB)**

(74) Representative: **Askew, Sarah Elizabeth**
**Unilever PLC**
**Unilever Patent Group**
**Bronland 14**
**6708 WH Wageningen (NL)**

(56) References cited:
EP-A1- 0 519 394          WO-A1-98/23169
WO-A1-2012/110376          WO-A1-2014/029574
WO-A2-2012/016852          US-A- 3 968 266
US-A- 5 789 004          ZA-A- 9 810 254

**Description**

**COMPOSITION FOR PREPARING A FROZEN CONFECTION**

The present invention relates to an aqueous composition in liquid form. The composition may be aerated, and may be frozen quiescently to prepare a frozen confection. The liquid composition may also be dried and subsequently rehydrated to reform the aqueous composition in liquid form. The invention also provides methods for preparation of the compositions of the invention, and a method for freezing the aerated composition of the invention.

**BACKGROUND TO THE INVENTION**

Usually a frozen confection is prepared in a factory, and stored and distributed from the factory to the consumer in frozen form. This has the disadvantage that much energy is required to keep the storage and distribution temperature below 0°C, or even below -10°C or -20°C, so that the consumer can consume a perfect frozen confection. Much energy can be saved by supplying and distributing a composition unfrozen and at a temperature above 0°C, and that the consumer can freeze at home, to prepare a perfect frozen confection. Such a distribution channel is much more sustainable and less energy consuming than the standard distribution channel at temperatures below 0°C. Therefore there is a need for the supply of compositions that can be distributed at temperatures higher than 0°C, and that the consumer can freeze at home to prepare a perfect frozen confection.

WO 2012/110376 A1 and WO 2014/029574 A1 relate to packaged shelf- or chilled-stable mixes of ingredients for the preparation of frozen confections. The compositions contain as emulsifier a propylene glycol monoester of fatty acid, preferably propylene glycol monostearate (PGMS).

WO 2008/009616 A2, WO 2008/009617 A1, WO 2008/009618 A2, and WO 2008/009623 A1 relate to stable foams having a controlled fine air bubble size distribution and to edible products prepared therefrom having a low fat content. The compositions preferably contain a polyglycerol ester of fatty acids (PGE).

Also WO 2012/016852 A2 relates to unfrozen packaged confectionery products for the preparation of quiescently frozen confectionery products, preferably containing a polyglycerol ester of fatty acids (PGE).

WO 98/23169 discloses an ice cream formulation that can be conveniently stored, prior to use. Also these formulations preferably contain a polyglycerol ester of fatty acids (PGE).

ZA 9810254 relates to an ice cream mix which can be stored above 0°C and which can be frozen by the consumer at home. The mix preferably contains mono- and diglycerides of fatty acids.

WO 2008/019865 A1 relates to the incorporation of air or gas into viscous food matrices, which are meant to be consumed at temperatures above 0°C. The compositions may contain a wide range of surfactant particles or crystals.

**SUMMARY OF THE INVENTION**

Production, distribution and storage of frozen confections costs much energy, because of the low temperatures that are required and consequently the cooling capacity. In order to substantially save on energy use, it would be very beneficial to prepare good quality compositions that can be distributed or stored at temperatures above 0°C, and that can be frozen by the consumer just before the point of consumption. Such frozen confection should have the same properties as regular frozen confections, that are frozen dynamically in a frozen confection factory. For example the structure, ice content, and size of ice crystals should be similar to the regular frozen confections. This means that the compositions should be stable with respect to structure, until the point that the compositions are frozen. Moreover such non-frozen compositions should be able to withstand pasteurisation to guarantee that the compositions are not spoiled during shelf-life. Because such compositions generally are susceptible for spoilage, due to the rich compositions for the growth of micro-organisms, the pasteurisation conditions for such compositions are generally harsh, meaning high temperatures. Such high temperatures may lead to undesired maillard reactions between sugars and proteins present in the formulations, and therewith to the formation of undesired taste, flavours, and colours. Therefore the formulations should be suitable for sterilisation, without formation of undesired tastes, flavours, or colours, and which micro- and macrostructure is stable until they are frozen.

We have met this objective by a liquid composition with a low water, fat and milk protein content, and high level of saccharide sweeteners which have been combined in such a way to create a good level of sweetness. This is combined with a specific selection of emulsifiers, organic acid ester of mono- and diglycerides of fatty acids. A mixture of the saccharide sweeteners has a number average molecular weight $<M>_n$ ranging from 240 to 350 gram per mole; and the total solids content ranges from 30% to 50% by weight. This combination of saccharide sweeteners and emulsifiers provides a range of advantages. When the composition is aerated, this emulsifier facilitates a fine bubble structure and stable aerated liquid composition. The ice content of the compositions when they are frozen is relatively low. Additionally, the composition can be heated for pasteurisation and sterilisation without detrimental effect on the taste and flavour of the composition. Such composition can be used to prepare an aerated composition, which is packaged, distributed and stored at temperatures above 0°C for a period of up to several months. Subsequently it can be quiescently frozen in such package, for instance by a consumer at home. Moreover, the relative amounts of the ingredients in the composition of the invention also leads to a desired structure and texture, when the composition has been quiescently frozen.

A dried composition may also be formed from the liquid composition by removing the water from the liquid composition to form a composition that is largely dried and preferably in a powder form. This dried composition can then be subsequently mixed with water to rehydrate the dried composition thereby to recreate the liquid composition. This recreated liquid composition can then be subsequently aerated and frozen to form an aerated frozen confection.

Accordingly in a first aspect the invention provides a composition in liquid form comprising water; oil at a concentration ranging from 0.5% to 8% by weight, preferably from 1% to 6% by weight; milk protein at a concentration ranging from 0.9% to 2.5% by weight; one or more compounds selected from monosaccharides, disaccharides, and oligosaccharides, at a concentration ranging from 32% to 40% by weight, and wherein a mixture of the one or more compounds selected from monosaccharides, disaccharides, and oligosaccharides has a number average molecular weight $<M>n$ ranging from 240 to 350 gram per mole; and

comprising one or more hydrocolloids to provide an apparent yield stress of at least 1 Pa; and
one or more emulsifiers comprising organic acid esters of mono- and diglycerides of fatty acids; and
total solids at a concentration ranging from 30% to 50% by weight.

In one embodiment the composition of the first aspect may have total solids at a concentration ranging from 30% to 42% by weight. In another embodiment the composition of the first aspect may have total solids at a concentration ranging from 42% to 50% by weight.

Preferably, the first aspect of the invention provides a composition according to the first aspect of the invention containing gas bubbles at an overrun ranging from 30% to 200%.

The invention may provides a method for preparation of a composition according to the first aspect of the invention, comprising the steps

a) Providing an unaerated composition according to the first aspect of the invention;
b) Optionally homogenising the composition from step a);
c) Heating the composition from step a) or step b) at a temperature ranging from 70°C to 155°C during a period ranging from 1 minute to 3 seconds ;
d) Optionally homogenising the composition from step c);
e) Aerating the composition from step c) or step d); and
f) Optionally packing the composition from step e) in a container and sealing the container.

The second aspect of the invention provides a method for preparation of a frozen aerated composition, wherein a composition according to the first aspect of the invention, is brought to a temperature below 0°C, preferably below -5°C, preferably between -10°C and -25°C.

When the aerated composition of the first aspect of the invention is quiescently frozen, the resultant microstructure resembles the frozen confection structure obtained by dynamic freezing. Such microstructure deliver similar organoleptic properties and product qualities as regular dynamically frozen confection. The aerated composition of the invention has favourable properties. The first is that a fine/stable dispersion of gas can be created, that does not disproportionate, shows no significant coarsening and is prevented from separating from the composition, e.g. by creaming. Moreover, the aerated composition does not display other forms of phase separation such as syneresis.

The invention provides a dried composition in which the water has been removed from the liquid composition of the first aspect to provide a water content of less than 10% by weight. Preferably the water content is less than 5% by weight, more preferably less than 4% by weight, more preferably still less than 3% by weight, yet more preferably less than 2% by weight, even more preferably less than 1% by weight. This dried composition is preferably in the form of a powder.

The invention may provides a method for the preparation of this dried composition comprising only steps a) to d) of the method of the second aspect and a further step in which the water is removed from the liquid composition. The water is preferably removed by spray drying.

The invention may finally provides a method for the preparation of a liquid composition according to the first aspect comprising the step of adding water to the dried composition in an amount to achieve a total solids content of from 30% to 50% by weight. This recreated liquid composition can be subsequently aerated and frozen to form an aerated frozen confection by any of the means set out herein above and below. It will be appreciated that the recreated liquid composition may be treated in exactly the same manner as the liquid composition of the first aspect and therefore any preferable features of the original liquid composition apply mutatis mutandis to the recreated liquid composition where relevant.

In one embodiment this method may be used to achieve a total solids content of from 30% to 42% by weight. In another embodiment this method may be used to achieve a total solids content of from 42% to 50% by weight.

Another advantages of our invention is that part of the conventional sucrose is replaced by other saccharides. Products, and in particular a frozen confection with a high sucrose concentration can be conceived by consumers to be too sweet. By using other saccharides, the sweetness of the compositions is reduced, while the beneficial properties of the presence of saccharides is maintained. In particular the presence of saccharides leads to a favourable microstructure of the frozen aerated composition.

## DETAILED DESCRIPTION OF THE INVENTION

### Tests and Definitions

All percentages, unless otherwise stated, refer to the percentage by weight (wt%).

In the context of the present invention, an average droplet or gas bubble diameter is expressed as the D4,3 value, which is the volume weighted mean diameter. Gas bubbles or droplets in a product may not be perfect spheres. The volume based bubble or droplet diameter equals the diameter of a sphere that has the same volume as a given bubble or droplet.

Ambient temperature is considered to be a temperature between about 15°C and about 40°C, preferably between 18°C and 30°C, preferably between 20°C and 25°C.

By the terms 'flowable composition' or 'flowable product', which are used interchangeably herein, we mean a composition where the composition will flow following a relatively small amount of agitation (e.g. shaking, stirring or sucking), as opposed to a solid or set composition. Flowable compositions include pourable compositions and semi-set compositions. The temperature at which the flowability of the composition or product is considered is the temperature at which the product is normally served. For example, flowability of a chilled product is typically determined at 5°C whereas flowability of an ambient product is typically determined at room temperature (20°C). Flowability of ice-containing products is typically determined at -10°C. Measurements are generally carried out at 1 atm pressure.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. Hence the term 'aeration' is not limited to aeration using air, and encompasses the 'gasification' with other gases as well. The extent of aeration is measured in terms of 'overrun' (with unit '%'), which is defined as:

$$overrun = \frac{\text{volume of aerated product - volume of initial mix}}{\text{Volume of initial mix}} \times 100\% \qquad (1)$$

where the volumes refer to the volumes of aerated product and unaerated initial mix (from which the aerated product is made). Overrun is measured at atmospheric pressure.

The overrun of an aerated product and the volume fraction of gas in the aerated product generally relate in the following way:

$$\text{volume fraction gas (in \%)} = 100 \times overrun / (1 + overrun) \qquad (2)$$

The term 'oil' as used herein refers to lipids selected from triglycerides, diglycerides, monoglycerides and combinations thereof. The oil may be solid or liquid at ambient temperature. The terms 'fat' and 'oil' may be used interchangeably throughout this specification, and refer to the same type of materials. Preferably the oil in the context of this invention comprises at least 90 wt% of triglycerides, more preferably at least 95 wt%.

### Frozen confection

As used herein, the term 'frozen confection' refers to a sweet-tasting fabricated foodstuff intended for consumption in the frozen state (i.e. under conditions wherein the temperature of the foodstuff is less than 0°C, and preferably under conditions wherein the foodstuff comprises significant amounts of ice). Typical examples of frozen confections include ice creams, water ices and sorbets.

### Saccharides and Sugar alcohols

A 'monosaccharide' is the basic unit of a carbohydrate, and they are the simplest form of sugars. Examples of monosaccharides are glucose, and fructose. A 'disaccharide' is a chemical compound which is formed by the reaction between two monosaccharides.

As used herein, the term 'oligosaccharide' refers to saccharides with a degree of polymerisation (DP) of at least 3 to 9. 'Polysaccharides' refers to saccharides having a degree of polymerisation of at least 10. 'Sugar alcohols' are alcohols prepared from saccharides, and they are a class of the polyols. Examples of these compounds are glycerol, erythritol, xylitol, sorbitol, and lactitol.

### Saccharides and sugar alcohols molecular weight

A method to determine the average molecular weight for sugars comprising a mixture of mono-, di- and/or oligosaccharides and/or sugar alcohols has been described by EP 1 676 486 A1. The average molecular weight is defined by the number average molecular weight $<M>_n$ (in g/mole):

$$< M >_n = \frac{\sum w_i}{\sum (w_i / M_i)} = \frac{\sum N_i M_i}{\sum N_i} \tag{3}$$

Where $w_i$ is the mass of saccharide or sugar alcohol i, $M_i$ is the molar mass of saccharide or sugar alcohol i and $N_i$ is the number of moles of saccharide or sugar alcohol i of molar mass $M_i$.

Glucose syrups (or 'corn syrups' as they are sometimes called) are complex multicomponent digestible saccharides derived from starch. The dextrose equivalent (DE) is a common industrial means of classification. Since they are complex mixtures their number average molecular weight $<M>_n$ can be calculated from equation 4 (J. Chirife et al, 1997, Journal of Food Engineering, 33, p. 221-226):

$$DE = \frac{18016}{< M >_n} \tag{4}$$

### Relative sweetness

Generally the relative sweetness of saccharides is determined relative to sucrose. Sucrose is taken as the reference with a sweetness of 1. A 10% solution of sucrose in water has a relative sweetness of 0.1. A relative sweetness of 0.33 is equivalent to 33% sucrose in water.

The total relative sweetness (TRS) can be calculated using the following formula:

$$TRS = (MS1/100 \times RSS1) + (MS2/100 \times RSS2) + (MS3/100 \times RSS3) + \dots \tag{5}$$

Herein MS1 is the concentration of sugar 1 in water, and RSS1 is the relative sweetness of sugar 1. Similarly for sugars 2 and 3.

Relative sweetness of some sugars: fructose = 1.7; dextrose monohydrate = 0.73; corn syrup solids 28DE = 0.077; corn syrup solids 40DE = 0.180.

For example a formulation containing 10% sucrose, 10% fructose and 10% dextrose monohydrate has the following relative sweetness:

$$TRS = 0.10 + 0.17 + 0.073 = 0.343$$

### Composition in liquid form

In a first aspect the present invention provides a composition in liquid form comprising water; oil at a concentration ranging from 0.5% to 8% by weight, preferably from 1% to 6% by weight; milk protein at a concentration ranging from 0.9% to 2.5% by weight;

one or more compounds selected from monosaccharides, disaccharides, and oligosaccharides, at a concentration ranging from 32% to 40% by weight, and wherein a mixture of the one or more compounds selected from monosaccharides, disaccharides, and oligosaccharides has a number average molecular weight <M>n ranging from 240 to 350 gram per mole; and

comprising one or more hydrocolloids to provide an apparent yield stress of at least 1 Pa; and
one or more emulsifiers comprising organic acid esters of mono- and diglycerides of fatty acids; and
total solids at a concentration ranging from 30% to 50% by weight. Alternatively the total solids may be at a concentration ranging from 30% to 42% by weight or from 42% to 50% by weight.

Preferably the composition according to the invention is an edible composition. The composition is in liquid form, which means that the composition is a flowable composition. In the context of the present invention, the composition is in liquid form at a temperature above 0°C, and at these temperatures the composition is a flowable product. Preferably the composition according to the first aspect of the invention is ambient stable or chilled stable, meaning that it can be stored and kept at a temperature of at least 0°C, and preferably maximally 40°C, preferably maximally 30°C, preferably maximally 25°C. Preferably the composition is ambient stable or chilled stable during a period of at least 2 weeks, preferably at least 4 weeks, preferably at least 8 weeks. With stable is meant that the composition can be stored without noticeable or only small deterioration of quality during the storage period.

Preferably the pH of the composition ranges from 4.5 to 7.5, preferably from 6.0 to 7.5.

The composition of the invention comprises oil at a concentration ranging from 0.5% to 8% by weight. Preferably the amount of oil ranges from 0.5% to 6% by weight, more preferred from 1% to 6% by weight. Preferred oils for use in the context of this invention are vegetable oils like coconut oil and palm oil, or fractions thereof. Another preferred fat is dairy fat, preferably milk fat, preferably cow's milk fat, or fractions thereof. Also combinations of these preferred oils and fats are within the scope of the present invention. The oil may be added as pure oil, or as an element of another ingredient. For example in case dairy fat is used, cream may be added to the composition, which contains both protein and oil. In the final composition, oil is dispersed in a continuous aqueous matrix.

The concentration of milk protein ranges from 0.9% to 2.5% by weight. This amount of milk protein is relatively low, in order to prevent the formation of undesired maillard reaction product during a possible pasteurisation or sterilisation step of the composition of the invention. Preferably the concentration of milk solids excluding fat ranges from 2% to 6% by weight of the composition. The milk solids excluding fat generally may be added to the composition in the form of skimmed milk powder. Generally skimmed milk powder is dried defatted dairy milk, and generally comprises about 35% milk protein (casein and whey protein) and about 50% lactose.

Alternatively, the present invention encompasses a composition comprising all elements of the first aspect of the invention, with the exception that such composition contains milk protein and/or soy protein at a total concentration ranging from 0.9% to 2.5% by weight.

The composition of the invention comprises one or more compounds selected from monosaccharides, disaccharides, and oligosaccharides at a concentration ranging from 32% to 40% by weight, and wherein a mixture of the one or more compounds selected from monosaccharides, disaccharides, and oligosaccharides has a number average molecular weight <M>n ranging from 240 to 350 gram per mole. This combination of sugars contributes to the stability of the liquid composition and to the microstructure of the frozen composition of the invention. In case lactose is added to the composition as part of skimmed milk powder, then this lactose is also included in the calculation of the total amount of saccharides.

Preferably the composition of the invention comprises one or more compounds selected from monosaccharides, disaccharides, oligosaccharides, and sugar alcohols at a concentration ranging from 32% to 40% by weight. Preferably the composition of the invention comprises one or more compounds selected from monosaccharides, disaccharides, oligosaccharides, and sugar alcohols having a number average molecular weight <M>n ranging from 240 to 350 gram per mole.

Preferably the mixture of the one or more compounds selected from monosaccharides, disaccharides, and oligosaccharides has a number average molecular weight <M>n ranging from 250 to 350 gram per mole, preferably from 270 to 340 gram per mole, preferably from 290 to 330 gram per mole. Preferably the composition of the invention comprises a mixture of monosaccharides, disaccharides, oligosaccharides, and sugar alcohols having a number average molecular weight <M>n ranging from 250 to 350 gram per mole, preferably from 270 to 340 gram per mole, preferably from 290 to 330 gram per mol. The average molecular weight can be obtained by a mix of various sugar sources. Preferably a mixture of lactose from milk solids, sucrose, glucose syrup having a dextrose equivalent (DE) value ranging from 20 to 45. Preferably the composition comprises a glucose syrup having a DE value ranging from 25 to 35, more preferred a DE value ranging from 26 to 30. The composition may also comprise a mixture of glucose syrups with different DE values. The composition preferably also contains a glucose syrup having a DE value ranging from 35 to 45. In particular the higher molecular weight saccharides contribute to the stability of the composition of the invention and the microstructure of the frozen composition. Glucose syrups and corn syrups are considered to be synonyms.

Preferably the relative sweetness of the mixture of the one or more compounds selected from monosaccharides, disaccharides, and oligosaccharides, is maximally 0.22, preferably maximally 0.2, preferably maximally 0.18. Preferably the composition of the invention comprises a mixture of monosaccharides, disaccharides, oligosaccharides, and sugar alcohols having a relative sweetness of maximally 0.22, preferably maximally 0.2, preferably maximally 0.18. This way a mix of sweeteners can be used which does not make the compositions too sweet, while it has the advantage that it contributes to the stability of the liquid composition of the invention and the frozen products.

The composition may contain sugar alcohols, alone or in combination with one or more compounds selected from monosaccharides, disaccharides, and oligosaccharides. Preferably though the maximum concentration of sugar alcohols is maximally 10% by weight of the composition, more preferred maximally 8% by weight of the composition. More preferred the maximum concentration of sugar alcohols is 6% by weight. Alternatively and preferably sugar alcohols are absent from the composition. If present, then preferred sugar alcohols are erythritol, sorbitol, maltitol, lactilol, and xylitol, and more preferred maltitol and erythritol. The composition may also contain soluble fibres like inulin and/or polydextrose and/or oligofructosaccharides in addition to or to replace part of the oligosaccharides.

The total amount of sweeteners is relatively high, therefore also the total solids content is relatively high, it ranges from 30% to 50%. Preferably the total solids concentration ranges from 42% to 48% by weight, preferably from 43% to 47% by weight. The total solids concentration may be at least 35%, more preferably at least 40%, more preferably still at least 43% by weight. The total solids concentration may be at most 49%, more preferably at most 48%, more preferably still at most 47% by weight.

A hydrocolloid as defined herein is a hydrophilic polymer which is dispersable in water. The one or more hydrocolloids to provide an apparent yield stress of at least 1 Pa preferably comprise a water-soluble compound. Preferably, the one or more hydrocolloids to provide an apparent yield stress of at least 1 Pa is selected from xanthan gum, carrageenan, guar gum, locust bean gum, tara gum, alginate, pectin, and carboxy-methylcellulose, and from any combination of these. Preferably the one or more hydrocolloids to provide an apparent yield stress of at least 1 Pa is selected from xanthan gum, carrageenan, guar gum, and locust bean gum, and from any combination of these. Preferably the one or more hydrocolloids provide an apparent yield stress of at least 2 Pa, preferably at least 3 Pa, more preferably at least 4 Pa, more preferably at least 5 Pa. Preferably the apparent yield stress is maximally 20 Pa, more preferred maximally 15 Pa, more preferred maximally 10 Pa. With apparent yield stress is meant the continuous phase apparent yield stress, meaning that the liquid phase has an apparent yield stress of at least 1 Pa. The yield stress prevents or delays creaming of gas bubbles, in case the composition of the invention contains dispersed gas bubbles. The yield stress is the force required to keep a bubble stationary in the liquid, counteracting the buoyancy. The hydrocolloid can increase the viscosity at zero shear or during flow. On mild agitation (e.g. manually gently shaking), the composition may flow due to shear thinning effect. The apparent yield stress can be determined as described in WO 2007/039064 A1. The dynamic viscosity of the liquid composition preferably ranges from 90 to 200 mPa·s at a shear rate of $0.1\ s^{-1}$ and a temperature of 20°C.

The concentration of the hydrocolloid materials preferably ranges from 0.1 to 2% by weight. The composition of the invention preferably comprises one or more hydrocolloid selected from the group of xanthan gum, carrageenan, guar gum, locust bean gum, tara gum, alginate, pectin, and carboxy-methylcellulose, and from any combination of these at a concentration ranging from 0.2 to 2% by weight, more preferred from 0.3 to 1.5% by weight, more preferred from 0.4 to 1% by weight. In case xanthan gum is used as the single hydrocolloid, the concentration of xanthan gum ranges from 0.4% to 0.8% by weight, preferably from 0.5% to 0.8% by weight, preferably from 0.5% to 0.7% by weight. In case the hydrocolloid comprises carrageenan, then preferably the carrageenan comprises iota-carrageenan. In case iota-carrageenan is used as the single hydrocolloid, the concentration of iota-carrageenan ranges from 0.3% to 0.6% by weight, preferably from 0.3% to 0.5% by weight.

Preferably the present invention provides a composition in liquid form comprising water;

oil at a concentration ranging from 0.5% to 8% by weight, preferably from 1% to 6% by weight;
milk protein at a concentration ranging from 0.9% to 2.5% by weight;
one or more compounds selected from monosaccharides, disaccharides, and oligosaccharides, at a concentration ranging from 32% to 40% by weight, and wherein a mixture of the one or more compounds selected from monosaccharides, disaccharides, and oligosaccharides has a number average molecular weight $<M>n$ ranging from 240 to 350 gram per mole; and
one or more hydrocolloids selected from xanthan gum, carrageenan, guar gum, locust bean gum, tara gum, alginate, pectin, and carboxy-methylcellulose, and from any combination of these at a concentration ranging from 0.1 to 2% by weight; and
one or more emulsifiers comprising organic acid esters of mono- and diglycerides of fatty acids; and
total solids at a concentration ranging from 30% to 50% by weight. Alternatively the total solids may be at a concentration ranging from 30% to 42% by weight or from 42% to 50% by weight.

Alternatively, the one or more hydrocolloids to provide an apparent yield stress of at least 1 Pa preferably comprise a water-insoluble compound, preferably water-insoluble cellulose-based fibres Such water-insoluble compound may be used in combination with a water-soluble hydrocolloid, to provide an apparent yield stress of at least 1 Pa. Preferably cellulose-based fibres have been treated to reduce the size of the cellulose-based fibres, and the surface area of the fibres may be increased due to disentanglement of fibrous materials, such that the liquid composition of the invention containing the cellulose-based fibres has an apparent yield stress of at least 1 Pa. Therefore the water-insoluble cellulose-based fibres preferably are obtainable from a process wherein an aqueous suspension of the fibres has been homogenised. Such homogenisation methods are known to the skilled person. Preferably such homogenisation is performed using a high pressure homogeniser. In case such a high pressure homogeniser is used, then typically such device is operated at a pressure ranging from 200 to 500 bar, or from 200 to 400 bar. Preferably such device is operated at a pressure ranging from 200 to 300 bar.

The water-insoluble cellulose-based fibres may be selected from a wide variety of types and forms, however preferably the fibres are plant-derived fibres. Such cellulose-based fibres are insoluble in water. Cellulose is found in plants as microfibrils, which typically have a diameter of 2 to 20 nm. These microfibrils form the structurally strong framework in the cell walls of plant materials. Cellulose is a linear polymer of $\beta$-(1$\rightarrow$4)-D-glucopyranose units. Cellulose molecules typically consist of 2,000 to 14,000 of such units and are completely insoluble in normal aqueous solutions. When dispersed in an aqueous solution, insoluble cellulosic fibres typically bind considerable amounts of water. Cellulosic fibres may contain other fibrous components such as hemicelluloses, pectins and lignin. Typically, such fibres are substantially or completely underivatised. Particularly preferred the water-insoluble cellulosic fibres are natural cellulosic fibres which have not been chemically modified. Preferably the cellulosic fibres are edible cellulosic fibres.

Unlike, for instance, microcrystalline cellulose, the cellulose molecules within the present fibres are essentially non-hydrolysed. Typically, the cellulose molecules contained within the water-insoluble cellulosic fibres employed in accordance with the present invention contain at least 1,000, preferably at least 2,000 $\beta$-(1$\rightarrow$4)-D-glucopyranose units.

Fibres originating from fruit yield particularly satisfactory results, although the cellulosic fibres may originate from vegetables as well. Preferably the water-insoluble cellulosic fibres employed originate from citrus fruit, tomatoes, carrot, celery, peaches, pears, apples, plumbs or combinations thereof. More preferably, the cellulosic fibres comprise citrus fibres or tomato fruit fibres. More preferred the water-insoluble cellulose-based fibres comprise citrus fibres. Most preferred, the water-insoluble citrus fibres originate from the albedo and/or the flavedo of citrus fruits. Examples of citrus fruits are lemon, lime, pomelo, orange, grapefruit, mandarin, and tangerine. Therefore the fibres of the present invention preferably originate from one or more of these fruits.

The fibres employed in the invention typically have a length of 1 to 200 micrometer. Preferably, the cellulosic fibres have an average length ranging from 5 to 100 micrometer.

Preferably, if present, the concentration of water-insoluble cellulose-based fibres ranges from 0.1% to 2% by weight of the composition. More preferred the concentration of the fibres ranges from 0.1% to 1.5% by weight, more preferred from 0.1% to 1% by weight, more preferred from 0.2% to 0.8% by weight.

A suitable commercially available fibre is for example Herbacel Type AQ Plus Type N, ex Herbafood Ingredients GmbH (Werder (Havel), Germany). These are citrus fibres, and contain not only cellulose, but also water soluble compounds.

Preferably, the water-soluble hydrocolloid used in combination with water-insoluble cellulose-based fibres comprises one or more compounds selected from the group of carboxy methylcellulose, tara gum, and guar gum. The total concentration of water-soluble hydrocolloids preferably ranges from 0.05% to 1% by weight, more preferred from 0.1% to 0.8% by weight.

Preferably, the extent of creaming is such, that after storage of an aerated composition of the invention during three weeks at 5°C, a visible serum layer lying below the aerated liquid that forms at the bottom of the product container, due to the depletion of air bubbles in the region through creaming, does not make up more than 15% of the total product height within the container. More preferably it does not make up more than 10% of the total product height within the container. This is preferably measured using a visual method by observing this phenomenon in foams sampled into measuring cylinders.

The composition of the invention comprises one or more emulsifiers comprising organic acid esters of mono- and diglycerides of fatty acids. The emulsifiers facilitate the formation and stabilisation of gas bubbles when the composition of the invention is aerated and comprises a dispersed gas phase. In such case, preferably the aerated product will lose no more than 20% of the total overrun when stored at 5°C for 2 weeks. More preferably, the aerated product will lose no more than 10% of the total overrun when stored at 5°C for 2 weeks. The emulsifiers that are present in the composition of the invention as described in here are the only classes of emulsifiers that are added in isolated form to the composition. Preferably the composition does not contain an emulsifier that does not belong to any of these classes that is added to the composition in isolated form. This excludes ingredients that may act as emulsifier and that are added to the composition as an element of other ingredients, such as the oil phase, the protein phase, or other ingredients. For example, the source of oil may naturally contain small amounts of monoglycerides, which can act as emulsifier.

Nevertheless, it is not the intention to add such emulsifier which may be present in the oil source. Likewise, a dairy fat source may contain phospholipids that can act as emulsifiers. When dairy fat is added, it is not the intention to add phospholipids which may be present in a source of dairy fat.

Various preferred emulsifiers may be used in the composition of the invention. Preferably the organic acid esters of mono- and diglycerides of fatty acids comprise one or more compounds selected from the group consisting of

acetic acid esters of mono- and diglycerides of fatty acids; and
lactic acid esters of mono- and diglycerides of fatty acids; and
citric acid esters of mono- and diglycerides of fatty acids; and
tartaric acid esters of mono- and diglycerides of fatty acids. These emulsifiers are preferably present at a total concentration ranging from 0.6% to 1.4% by weight, preferably from 0.8% to 1.2% by weight. Preferably the emulsifier comprises one or more compounds selected from the group consisting of acetic acid esters of mono- and diglycerides of fatty acids; and lactic acid esters of mono- and diglycerides of fatty acids; and citric acid esters of mono- and diglycerides of fatty acids. More preferred the emulsifier comprises citric acid esters of mono- and diglycerides of fatty acids.

Acetic acid esters of mono- and diglycerides of fatty acids are approved food additives in Europe, with number E472a. In case these compounds are present as the only added emulsifiers, then preferably their concentration ranges from 0.6% to 1.4% by weight, preferably from 0.8% to 1.2% by weight. A suitable commercially available source is the Grindsted Acetem range, ex DuPont Danisco (Copenhagen, Denmark). This is made from fully hydrogenated palm based oil.

Lactic acid esters of mono- and diglycerides of fatty acids are approved food additives in Europe, with number E472b. In case these compounds are present as the only added emulsifiers, then preferably their concentration ranges from 0.6% to 1.4% by weight, preferably from 0.8% to 1.2% by weight. A suitable commercially available source is the Grindsted Lactem range, ex DuPont Danisco (Copenhagen, Denmark). This is made from fully hydrogenated palm based oil.

Citric acid esters of mono- and diglycerides of fatty acids are approved food additives in Europe, with number E472c. In case these compounds are present as the only added emulsifiers, then preferably their concentration ranges from 0.6% to 1.4% by weight, preferably from 0.8% to 1.2% by weight. Such compound is for example available as Grindsted Citrem, from Dupont Danisco (Copenhagen, Denmark), preferably Grindsted Citrem N12. This is a neutralised citric acid ester of mono-di-glycerides made from fully hydrogenated palm based oil.

Tartaric acid esters of mono- and diglycerides of fatty acids are approved food additives in Europe, with number E472d. In case these compounds are present as the only added emulsifiers, then preferably their concentration ranges from 0.08% to 1.4% by weight, preferably from 0.1% to 1.2% by weight. Such compound is for example available from A&Z Food Additives co. (Zhejiang, China).

In addition to the organic acid esters of mono- and diglycerides of fatty acids, also other emulsifiers may be present in the compositions. These additional emulsifiers preferably are selected from monoesters of propylene glycol and a fatty acid; and mono- and diglycerides of fatty acids; and polyglycerolesters of fatty acids; and sodium stearoyl lactylates.

In case the additional emulsifier comprises one or more monoesters of propylene glycol and a fatty acid as the only added emulsifier, then preferably the concentration of this emulsifier ranges from 0.05 to 0.5% by weight, more preferably from 0.1 to 0.3% by weight. Preferred fatty acids are stearate, palmitate, and oleate. Preferably the monoester of propylene glycol and fatty acid comprises propylene glycol monostearate (PGMS). The term PGMS is to be understood as encompassing any type of PGMS isomer. A monoester of propylene glycol and a fatty acid is an approved food additive in Europe, with number E477. Such compound is available as Grindsted® PGMS, ex Dupont Danisco or as Myverol P-09 K ex Kerry Foods (Kerry, Ireland).

In case the additional emulsifier comprises comprises polyglycerol esters of fatty acids, then preferably the concentration ranges from 0.05 to 0.5% by weight, more preferably from 0.1 to 0.3% by weight. Preferably the polyglycerol moiety is mainly di-, tri- and tetraglycerol, and the iodine value is less than 50% and more preferably less than 20%. Preferably the concentration of this additional emulsifier then ranges from 0.05 to 0.5% by weight, more preferably from 0.1 to 0.3% by weight. A suitable source is Grindsted PGE ex DuPont Danisco.

In case the additional emulsifier comprises sodium stearoyl lactylates (SSL), then preferably the concentration ranges from 0.05 to 0.5% by weight, more preferably from 0.1 to 0.3% by weight. A suitable source is Grindsted SSL ex DuPont Danisco.

In case the additional emulsifier comprises mono- and diglycerides of fatty acids as the only class of added emulsifiers, then preferably the concentration ranges from 0.05 to 0.5% by weight, more preferably from 0.1 to 0.3% by weight. Preferably the monoester content is greater than 20%, more preferably greater than 40% and most preferably greater than 60%. The iodine level should preferably be less than 50% and more preferably less than 20%. Suitable sources are Grindsted Mono-Di- HP72 and HP60 ex DuPont Danisco. These are made from edible, fully hydrogenated palm oil.

The composition of the invention can be present in an unaerated as well as in an aerated form. With unaerated is meant that the composition has not been intentionally aerated, although a single air or gas bubble may be present in the composition. Preferably such unaerated composition of the invention may be packaged in a closed package. In such case a consumer or anyone else can aerate the composition at the point of use, for example using a hand held mixer or whisker, and subsequently quiescently freeze the aerated composition. A particular advantage of the composition of the invention that the composition can be distributed and stored at ambient temperatures. Also the aerating (e.g. whipping) can be done at ambient temperatures.

### Aerated composition in liquid form

Preferably the composition of the invention is aerated such that the product has a foamy structure and appearance. Aeration can be done with any gas normally used in food products, like air, oxygen, nitrogen, and carbon dioxide. Preferably aeration is done using air or nitrogen. In case the composition has been aerated, then preferably the composition contains gas bubbles at an overrun ranging from 30% to 200%. Preferably the overrun ranges from 30% to 150%. In such case gas bubbles will be dispersed in the continuous liquid phase. Preferably the gas bubbles have an average diameter D4,3 ranging from 5 to 100 micrometer, preferably ranging from 10 to 100 micrometer. Preferably at least 50% of the number of gas bubbles has a diameter smaller than 100 micrometer, more preferred at least 75% of the gas bubbles. Incidentally also larger bubbles may be present.

Also the aerated composition according to the invention is in liquid form, which means that it is a flowable composition. In the context of the present invention, the aerated composition is in liquid form at a temperature above 0°C, and at these temperatures the composition is a flowable product.

Preferably such aerated composition is packaged in a closed package. Preferably, the composition is packaged aseptically. Preferably the package is sealed. This way the composition of the invention can be distributed at a temperature above 0°C. Therefore preferably the composition is at a temperature of 0°C or higher, preferably at a temperature of maximally 40°C, preferably maximally 35°C. Preferably a packaged aerated composition according to the invention is at a temperature of 0°C or higher, preferably at a temperature of maximally 40°C, preferably maximally 35°C.

Preferably the composition of the invention is free from ethanol, starch, and hydrophobin.

### Frozen composition

The packaged aerated composition of the invention can be frozen, by putting the packaged composition in a freezer at a temperature below 0°C. This way the composition will be quiescently frozen, meaning without agitation or aeration during the freezing process, to yield a frozen confection. Preferably the aerated composition of the invention is at a temperature below 0°C, preferably below -5°C, preferably between -10°C and -25°C. Preferably the temperature at which the aerated composition is frozen is maximally -18°C. Preferably the ice content ranges from 30% to 40% by weight at -18°C, preferably from 32% to 39% by weight. This way a quiescently frozen microstructure is prepared, that mimics that of a dynamically frozen confection. The advantage of the invention is that the structure of the frozen composition resembles that of a dynamically frozen composition.

The ice content of the frozen composition is relatively low, and by having this combined with the low protein and fat content, the high total solids content, the specific combination of sugars, a composition is prepared that can be pasteurised when liquid without formation of undesired maillard reaction compounds. Moreover it can be distributed at temperatures above 0°C, and can be quiescently frozen, while providing a good texture, and without becoming too sweet. This way an excellent frozen confection be prepared by and served to a consumer, without the need of a distribution chain at -18°C or lower. Production and distribution of the aerated liquid composition of the invention can be done at temperatures above 0°C. Consequently this leads to a strong reduction of energy consumption, compared to the traditional supply chain of frozen confections.

### Method for preparation of liquid composition

The invention may provide a method for preparation of the liquid composition of the invention. An unaerated liquid composition according to the first aspect of the invention can be prepared using any common equipment usually used for preparing liquid mixtures. The preparation method encompasses preferably three distinct unit operations:

1. Mixing stage - the ingredients of the composition of the invention are brought together, solubilised in water and mixed.
2. Optionally a homogenisation stage - to disperse the fat in small emulsion droplets for stability, at 0 to 150 bar in a high pressure homogenizer.

3. A heating section for either pasteurisation (for example 80°C for 30 seconds) or sterilisation (for example 140°C or 150°C for 4 to 10 seconds); to achieve longer shelf life/commercial sterility determined by required shelf life.

In case an aerated product according to the invention is prepared, a suitable method for preparation of such a composition comprises the steps:

a) Providing an unaerated composition according to the first aspect of the invention;
b) Optionally homogenising the composition from step a);
c) Heating the composition from step a) or step b) at a temperature ranging from 70°C to 155°C during a period ranging from 1 minute to 3 seconds ;
d) Optionally homogenising the composition from step c);
e) Aerating the composition from step c) or step d); and
f) Optionally packing the composition from step e) in a container and sealing the container.

In step a) a premix of the composition is provided, which usually has been prepared in a mixed vessel. Preferably this is done by first mixing the part of saccharides, stabilisers and emulsifiers, and mixing this with heated water, preferably at a temperature of at least 70°C, preferably at least 75°C. Preferably milk protein is added to the mix when the temperature of the mix is lower than 75°C, after which optional glucose syrup is added. Subsequently, oil which is melted may be added and emulsified. The product has not yet been intentionally aerated. Incidentally the composition may contain gas bubbles which may have been included in the composition during the preparation process. In this step oil droplets are dispersed in a continuous aqueous matrix and the hydrocolloid providing yield stress is dispersed. Preferably in this step the oil droplets are have a volume weighted geometric mean diameter D4,3 of less than 20 micrometer, preferably less than 15 micrometer. This mean diameter may suitably be determined using the method described by Goudappel et al. (Journal of Colloid and Interface Science 239, p. 535-542, 2001). Typically, 80 to 100% of the total volume of the oil droplets contained in the present emulsion have a diameter of less than 20 micrometer.

In step b) the composition optionally is homogenised to make a more homogeneous and smooth premix. Preferred equipment for homogenisation include a high-shear mixer, with an impeller for mixing. Another preferred equipment is a high pressure homogeniser that is used to homogenise, preferably operating at a pressure ranging from 10 to 200 bar, preferably from 20 to 150 bar.

In step c) the composition is heated to pasteurise or sterilise the composition. The heating equipment that is used may be any common equipment common to food industry, like a plate heat exchanger or direct steam injection. Preferably the temperature ranges from 80°C to 152°C, and preferably the heating time ranges from 30 seconds to 4 seconds. The higher the temperature, the shorter the required temperature. In case the composition is pasteurised, typical heating time and temperature are 30 seconds at 80°C. In case the composition is sterilised, typical heating time and temperature are 4 seconds at 151°C. A preferred sterilisation condition is 145°C during 4.5 second, as this gives the optimal viscosity of the liquid mixture. Direct heating with steam injection is favourable, as undesired maillard reactions do not seem to occur. Such maillard reactions could lead to browning and development of undesired flavours.

In step d) the composition may be homogenised to make a homogeneous and smooth premix. Preferred equipment for homogenisation include a high-shear mixer, with an impeller for mixing. Another preferred equipment is a high pressure homogeniser that is used to homogenise, preferably operating at a pressure ranging from 10 to 300 bar, preferably from 30 to 250 bar, used to homogenise, preferably operating at a pressure ranging from 100 to 300 bar. The temperature of the mixture at which this may be done preferably ranges from 70°C to 155°C, which is the temperature range in the heating step. Preferably the temperature during homogenisation ranges from 70°C to 90°C. After homogenisation the product may be cooled to room temperature or chilled temperatures, above 0°C.

In case the composition of the invention contains insoluble cellulose-based fibre, for example citrus fibre, then the composition is homogenised in step d) such that the apparent yield stress of the liquid mixture in this step is more than 1 Pa. Such homogenisation methods are known to the skilled person. This is done to increase functionality of the cellulose-based fibres, by reducing the size of the larger cellulose-based fibres, and the surface area of the fibres may be increased due to disentanglement of fibrous materials. Preferably homogenisation is performed using a high pressure homogeniser. In case such a high pressure homogeniser is used, then typically such device is operated at a pressure ranging from 200 to 500 bar, or from 200 to 400 bar. Preferably such device is operated at a pressure ranging from 200 to 300 bar.

In step e) the heated composition is aerated to an overrun preferably ranging from 30% to 200%. Preferably the overrun ranges from 30% to 150%. Aeration of the composition may be done as a batch operation, with a mixer which disperses air bubbles in the mixture, or may be done in line, using a continuous aerator. Such aerators operate by continuously passing mix through a reactor head which has a whipping camber composed of a stator and a rotor. Aeration is achieved by injecting the desired level of gas into the incoming premix - gas bubble breakdown and mixing is accomplished through the high speed rotation of the rotor equipped with teeth which pass through narrow gaps formed by additional static teeth mounted on the stator. The temperature of the mixture during aeration preferably ranges from 5°C to 25°C. Preferably the aeration is done aseptically, such that the pasteurised or sterilised composition is not spoiled.

Finally in optional step f) the aerated composition is packaged in a container and then closed or sealed. The temperature of the aerated composition in this step f) preferably ranges from 5°C to 25°C. Preferably the packaging is done aseptically, such that the pasteurised or sterilised composition is not spoiled. This way the aerated composition of the invention can be distributed. The package that is used may be any package that is commonly used for sterilised composition is not spoiled. This way the aerated composition of the invention can be distributed. The package that is used may be any package that is commonly used for liquid food compositions. Preferably the package can withstand temperatures between 0°C and -30°C.

The second aspect of the invention provides a method for preparation of a frozen aerated composition, wherein a composition according to is brought to a temperature below 0°C, preferably below -5°C, preferably between -10°C and -25°C. Preferably the aerated composition of the invention is packaged in a closed container before it is being frozen. Preferably the aerated composition is not agitated when brought to a temperature below 0°C, preferably below -5°C, preferably between -10°C and -25°C. That means that preferably the composition is quiescently frozen, which can be done by a consumer in home. The consumer purchases an aerated composition according to the first aspect of the invention, which is packaged in a closed container. The closed container is put in a freezer, to yield a frozen confection.

### Composition in dried form

In a further aspect of the invention the water may be removed from the liquid composition of the first aspect to provide a composition that is lighter, easier to transport, and has enhanced microbiological stability. The invention therefore provides a dried composition in which the water has been removed from the liquid composition of the first aspect to provide a water content of less than 10% by weight. Preferably the water content is less than 5% by weight, more preferably less than 4% by weight, more preferably still less than 3% by weight, yet more preferably less than 2% by weight, even more preferably less than 1% by weight. This dried composition is preferably in the form of a powder.

### Method for preparation of composition in dried form

The invention provides a method for the preparation of the dried composition above. This method comprised only steps a) to d) of the method above (i.e. step a) Mixing water, oil, milk protein, one or more compounds selected from monosaccharides, disaccharides, and oligosaccharides, one or more emulsifiers, water-insoluble cellulose-based fibres and one or more water-soluble hydrocolloids; then step b) Optionally homogenising the composition from step a); then step c) Optionally heating the composition from step a) or b) at a temperature ranging from 70°C to 155°C during a period ranging from 1 minute to 3 seconds; then step d) Homogenising the composition from step a), b), or c);). The method comprises a further step in which the water is removed from the liquid composition. The water is preferably removed by spray drying.

### Method for preparation of liquid composition from composition in dried form

The invention provides a method for the preparation of a liquid composition according to the first aspect. The method comprised the step of adding water to the dried composition in an amount to achieve a total solids content of from 30% to 50% by weight. This recreated liquid composition can be subsequently aerated and frozen to form an aerated frozen confection by any of the means set out herein above and below. The recreated liquid composition can be treated in exactly the same way as the liquid composition of the first aspect and therefore any preferable features of the original liquid composition apply mutatis mutandis to the recreated liquid composition where relevant.

### DESCRIPTION OF FIGURES

> *Figure* 1: Scanning electron microscopy images of quiescently frozen composition of example 1, comparative mix AE1 containing 0.35% PGMS; bar size 100 micrometer (image width about 1 mm). This shows air bubbles in a continuous matrix of water, ice, sugars, and other ingredients.
>
> *Figure 2:* Scanning electron microscopy images of quiescently frozen composition of example 1, mix AD6 containing 1% Citrem; bar size 100 micrometer (image width about 1 mm). This shows air bubbles in a continuous matrix of water, ice, sugars, and other ingredients.
>
> *Figure 3:* Scanning electron microscopy images of quiescently frozen composition of example 1, comparative mix 9077 containing 0.35% PGMS; bar size 100 micrometer (image width about 1 mm). This shows air bubbles in a continuous matrix of water, ice, sugars, and other ingredients.

*Figure 4:* Scanning electron microscopy images of quiescently frozen composition of example 1, mix 9069 containing 1% Citrem; bar size 100 micrometer (image width about 1 mm). This shows air bubbles in a continuous matrix of water, ice, sugars, and other ingredients.

*Figure* 5: Two scanning electron microscopy images of quiescently frozen compositions of example 1, comparative mix AE2 containing 1% PGMS; bar size 100 micrometer (image width about 1 mm). This shows air bubbles in a continuous matrix of water, ice, sugars, and other ingredients.

**Raw materials**

- Coconut oil: refined ex Cargill.
- Cream: 40%, ex Meadow Foods (Chester, Cheshire, UK).
- Skimmed milk powder, ex Dairy crest (Esher, Surrey, UK).
- Whey powder: 30%, ex FrieslandCampina DMV (Veghel, Netherlands)
- Dextrose monohydrate: C-Pharm Dex 02010 ex Cargill.
- Sucrose, ex Tate and Lyle (London, UK).
- Glucose syrup 28DE: spray dried C-Dry GL 01924, ex Cargill.
- Glucose syrup 40DE: spray dried C-Dry GL 01934, ex Cargill.
- Citric acid esters of mono- and diglycerides of fatty acids: Grindsted Citrem N12 ex DuPont Danisco.
- Acetic acid ester of monoglycerides:

    - Grindsted Acetem 50-00 P Kosher (ex DuPont Danisco).
    - Grindsted Acetem 70-00 P Kosher (ex DuPont Danisco).

- Lactic acid ester of mono- diglyceride: Grindsted Lactem P 22 Kosher (DuPont Danisco).
- Propylene glycol monostearate (PGMS): Myverol P-09 K ex Kerry Foods.
- Mono-di-glycerides of saturated fatty acids: Grindsted Mono-Di- Glycerides HP60, ex DuPont Danisco. Made from edible, fully hydrogenated palm oil. Manufacturers specifications: Total monoglyceride 50-63%; iodine value 3.
- Xanthan gum: Keltrol F, ex CP Kelco.
- Guar gum: Grindsted Guar 250, ex DuPont Danisco.
- Carrageenan L100: kappa-carrageenan Genulacta L100 ex CP Kelco.
- Carrageenan: iota-carrageenan, Grindsted, ex DuPont Danisco
- CMC: Carboxy methylcellulose Grindsted Cellulose Gum Mas 200, ex DuPont Danisco.
- Sucrose fatty acid esters: S1670, ex Mitsubishi-Kagaku (Tokyo, Japan); fatty acid residue composition -70% stearate, -30% palmitate; -75% monoester content.
- Hygel: 8260 whipping aid, ex Kerry Foods..
- Citrus fibre: Herbacel Type AQ Plus Type N, ex Herbafood Ingredients GmbH (Werder (Havel), Germany).

DuPont Danisco: from Copenhagen, Denmark; CP Kelco: from Nijmegen, The Netherlands); Cargill: from Minneapolis, MN, USA; Kerry Foods: from Kerry, Ireland.

**Example 1: Preparation of aerated compositions and quiescently freezing the compositions**

Liquid compositions were prepared with the following formulations.

*Table 1 Formulation of liquid compositions.*

| Ingredient | mix AE1 comparative concentration [wt%] | mix AD6 concentration [wt%] |
|---|---|---|
| water | to 100% | to 100% |
| coconut oil | 5.0 | 5.0 |
| skimmed milk powder | 5.6 | 5.6 |
| xanthan gum | 0.4 | 0.4 |
| dextrose monohydrate | 12.0 | 12.0 |

(continued)

| Ingredient | mix AE1 comparative concentration [wt%] | mix AD6 concentration [wt%] |
|---|---|---|
| sucrose | 6.4 | 6.4 |
| glucose syrup 28DE | 5.5 | 5.5 |
| glucose syrup 40DE | 10.6 | 10.6 |
| PGMS | 0.35 | |
| Citrem N12 | | 1.0 |
| flavour | 0.2 | 0.2 |

These mixes have a total solids content of 44.4-45.5 wt%, total sugars content: 36 wt%, relative sweetness 0.18; average molecular weight $<M>_n$ of the sugars mix 312 g/mol;

These mixtures were prepared by the following process. A premix of each composition was prepared in a mixed vessel. This was done by first mixing dry sugars, emulsifier, and stabiliser, and adding this dry mix to water at 82°C. After 2 minutes stirring, skimmed milk powder was added at 72°C. After 2 minutes mixing, the glucose syrups were added, at 70°C. After 2 minutes mixing, molten coconut oil was added at 65°C. After 8 minutes stirring on high speed to disperse the oil droplets and dissolve the xanthan gum, flavour was added. Subsequently the mixtures were heated at a temperature of 80°C during a time period of 30 seconds. The heating was done in a plate heat exchanger. The mixtures could be heated without formation of undesired maillard compounds. After the heating step, the mixtures were aerated with air using a WCB inline aerator (WCB Ice Cream, Aarhus, Denmark) to an overrun of about 100%.

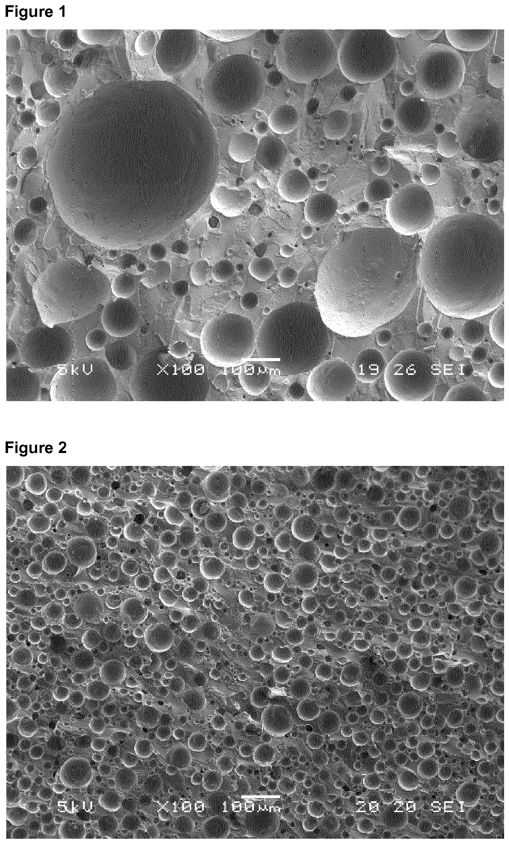

After aeration the samples were individually packed and quiescently frozen at -18°C. The calculated ice content of the products was 38.8%. Scanning electron microscopy images were made of the frozen compositions, and an example of these is shown in Figure 1 and Figure 2. The images show that frozen mixture AD6 containing Citrem has a much finer and more homogeneously distributed gas bubble structure than comparative frozen mixture AE1 containing PGMS.

In a next experiment, two compositions were prepared nearly the same as in Table 1, with the exception of xanthan gum: the concentration in the next experiments was 0.55%, and not 0.4% as in the compositions in Table 1. This was compensated by the amount of water. Mixture coded 9069 contained Citrem, and comparative mixture coded 9077 contained PGMS.

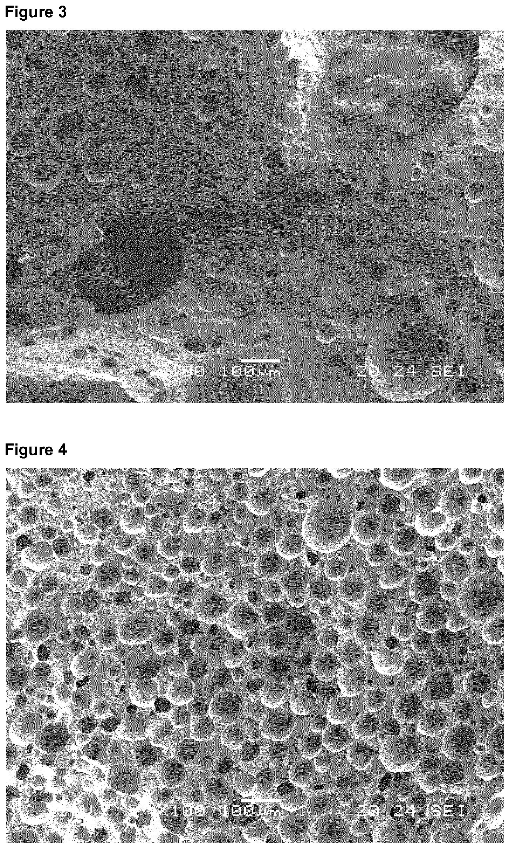

These compositions were prepared similarly as the compositions in example 1, with the exception of the heating time and temperature: 151°C for 4 seconds. After this heating step, the mixtures were aerated to an overrun of about 100%, and frozen at a temperature of -18°C. Scanning electron microscopy images were also made of these frozen compositions, and an example of these is shown in Figure 3 and Figure 4. The images show that, also in this comparison, frozen mixture 9069 containing Citrem has a much finer and more homogeneously distributed gas bubble structure than comparative frozen mixture 9077 containing PGMS.

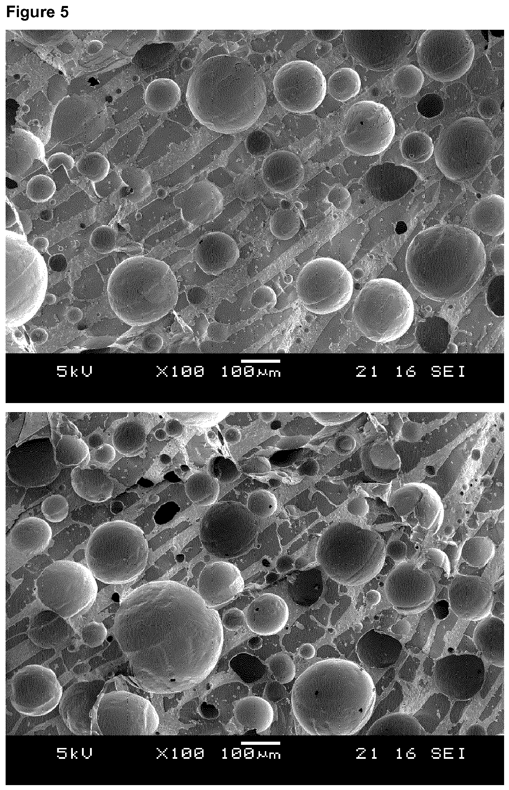

A further comparative composition coded AE2 containing PGMS was prepared, where the concentration of PGMS was 1.0%, as compared to mixture AE1 in Table 1. This was compensated by the amount of water. Otherwise the composition was the same as AE1. The liquid composition was prepared in the same way as sample AE1, and subsequently aerated using a Kenwood Chef mixer to an overrun of 102%, which took 4 minutes. It took 3 minutes to achieve 66% overrun. Subsequently samples were frozen overnight at -18°C, and scanning electron microscopy images were made of the frozen compositions. An example of these is shown in Figure 5. These images show that frozen mixture AE2 containing 1% PGMS contains air bubbles with a rather wide range of sizes. Moreover, the continuous matrix shows banded structures (light grey and darker grey areas in the background). This is caused by locally relatively high concentration of ice crystals, yielding a rather dense product which was not particularly well aerated after freezing. Frozen mixture AD6 containing 1% Citrem has a low ice concentration as seen on the microscopic images, and has a more homogeneous microstructure.

**Example 2: Preparation of aerated compositions**

Two liquid compositions containing PGMS were prepared similarly as in example 1, with the following formulations and product parameters. These formulations are similar to compositions as described in WO 2012/110376 and WO 2012/016852.

*Table 2 Formulation of comparative liquid compositions and analysis of parameters.*

| Ingredient | Mix 2-1 Concentration [wt%] | Mix 2-2 Concentration [wt%] |
|---|---|---|
| water | to 100% | to 100% |
| skimmed milk powder | 10.0 | 6 |
| whey powder | | 2.5 |
| coconut oil | 10.0 | 10.0 |
| guar gum | 0.87 | 0.15 |
| CMC | | 0.05 |
| carrageenan L100 | | 0.02 |
| sucrose | 20.0 | 12.5 |
| Glucose syrup 40DE | | 4.5 |
| PGMS | 0.35 | 0.3 |
| Mono-di-glycerides HP60 | | 0.05 |
| Analysis | | |
| total solids content [wt%] | 39.9 | |
| overrun [%] | 100 | |
| relative sweetness of the sugars mixture [-] | 0.21 | 0.15 |
| calculated <M>n of sugars [g/mol] | 342 | 360 |
| ice content at -18°C [%] | 45.6 | 52.9 |
| protein content [wt%] | 3.16 | |

Mix 2-1 was prepared similarly as in example 1, and also heated at 80°C for 30 seconds. Subsequently mix 2-1 was homogenised using a high pressure homogeniser at a pressure of 160 bar. Subsequently it was aerated to an overrun of about 100% using the WCB aerator. Mix 2-1 was not stable after preparation. Large gas bubbles formed during storage of the liquid aerated composition .

Mix 2-2 was also prepared similarly as in example 1. Following WO 2012/016852, mix 2-1 was prepared having its natural pH of 6.8, and a slightly acidified version was prepared, by the addition of citric acid to a pH of 6.2. Both mixes were homogenised using a high pressure homogeniser at a pressure of 160 bar, and subsequently heat treated 95°C to 135°C for 10 to 90 seconds, using an inline plate heat-exchanger. Extensive fouling occurred, and the mixes could not be aerated.

**Example 3. Aerated liquid compositions**

Comparative aerated liquid compositions were prepared having compositions as in Table 3.

*Table 3 Formulation of comparative liquid compositions.*

| Ingredient | AA7 [wt%] | AB7 [wt%] | AB1 [wt%] |
|---|---|---|---|
| Water | to 100% | to 100% | to 100% |
| Skimmed milk powder | 10.0 | 10.0 | 10.0 |
| Cream | 7.3 | 7.3 | 7.3 |
| Dextrose monohydrate | 9.4 | 9.4 | 9.4 |
| Sucrose | 24.5 | 24.5 | 24.5 |
| Xanthan gum | 0.4 | 0.4 | 0.4 |
| Hygel | | 0.4 | |

(continued)

| Ingredient | AA7 [wt%] | AB7 [wt%] | AB1 [wt%] |
|---|---|---|---|
| S1670 | | | 0.5 |
| Flavours | 0.2 | 0.2 | 0.2 |

For each mixture the ingredients except cream were mixed in a stirred vessel to make a homogeneous mixture, similarly as in example 1. Subsequently the mixtures were heated at 80°C for 30 seconds, in a plate heat exchanger.

After the heating step, the mixture was aerated with air using the WCB inline aerator, to overruns of 95%. Cream was added after the aeration to give a final formulation composition of 3.5% fat.

After aeration the foams were visually assessed on stability of the foams during storage at a temperature of 5°C. The factors assessed were the following:

- Stability of overrun during storage: good when no or very small overrun loss, and bad when severe overrun loss during storage.
- Bubble growth during storage: good when no or very small coarsening of bubbles, and bad when severe coarsening of bubbles during storage.
- Phase separation (bubbles) during storage: good when no or very small creaming of bubbles, and bad when severe creaming of bubbles.
- Phase separation (serum) during storage: good when no or very small formation of serum layer on bottom of container, and bad when thick serum serum layer on bottom of container.

The evaluation of the samples gave the following:

Table 4 Results of visual assessment of foam stability of samples in Table 3.

| sample | storage period [days] | overrun stability | bubble growth | phase separation (bubbles) | phase separation (serum) |
|---|---|---|---|---|---|
| AA7 | 86 | good | bad | bad | good |
| AA7 | 220 | bad | bad | bad | bad |
| AB1 | 78 | bad | bad | good | good |
| AB1 | 139 | bad | bad | bad | bad |
| AB7 | 39 | bad | bad | bad | good |
| AB7 | 106 | bad | bad | bad | bad |

This shows that the samples with skimmed milk powder and either Hygel or sucrose fatty acid ester added did not provide stable foams.

**Example 4. Aerated liquid compositions with citric acid fatty acid ester**

Aerated liquid compositions were prepared having compositions as in Table 5.

Table 5 Formulations of liquid compositions.

| | 9069* [wt%] | 9074 [wt%] | AD7 [wt%] | AD6 [wt%] | 9075 [wt%] | AA14 [wt%] | AB2 [wt%] | AI1 [wt%] |
|---|---|---|---|---|---|---|---|---|
| Skimmed milk powder | 5.62 | 5.62 | 5.62 | 5.62 | 5.62 | 10 | 10 | 10 |
| Coconut oil | 5 | 5 | 5 | 5 | 5 | 5 | 5 | 5 |
| Sucrose | 6.4 | 6.4 | 6.4 | 6.4 | 6.4 | 6.4 | 6.4 | 6.4 |
| Dextrose monohydrate | 12 | 12 | 12 | 12 | 12 | 12 | 12 | 12 |

(continued)

| | 9069* [wt%] | 9074 [wt%] | AD7 [wt%] | AD6 [wt%] | 9075 [wt%] | AA14 [wt%] | AB2 [wt%] | AI1 [wt%] |
|---|---|---|---|---|---|---|---|---|
| Glucose syrup 28 DE | 5.5 | 5.5 | 5.5 | 5.5 | 5.5 | 5.5 | 5.5 | 5.5 |
| Glucose syrup 40 DE | 10.6 | 10.6 | 10.6 | 10.6 | 10.6 | 10.6 | 10.6 | 10.6 |
| flavour | 0.2 | 0.2 | 0.2 | 0.2 | 0.2 | 0.2 | 0.2 | 0.2 |
| xanthan gum | 0.55 | 0.55 | | 0.4 | | 0.4 | 0.4 | 0.4 |
| iota-carrageenan | | | 0.4 | | | | | |
| citrus fibre | | | | | | 0.4 | | |
| CMC | | | | | | 0.2 | | |
| Citrem N12 | 1.0 | 1.0 | 1.0 | 1.0 | 1.0 | | | 1.0 |
| Mono-di-glycerides HP60 | | | | | | 1.0 | | |
| Water | to 100% | to 100% | to 100% | to 100% | to 100% | to 100% | to 100% | to 100% |
| * 9069 is the same sample as 9069 in example 1. | | | | | | | | |

Mixtures 9069, 9074, AD7, AD6, and AB2 were prepared by first preparing a liquid mixture similar as in example 1. No additional homogenisation step was done after preparing the liquid mixture. Mixtures 9069 and 9075 were sterilised at 151°C for 4 seconds. Mixture 9074 was sterilised at 141°C for 4 seconds. Mixtures AD7, AD6, and AB2 were pasteurised at 80°C for 30 seconds. Subsequently the samples were aerated using the WCB in-line aerator to an overrun of about 100%.

Mixture AA14 was prepared by first preparing a liquid mixture similar as in example 1, and pasteurised at 80°C for 30 seconds. No additional homogenisation step was done after preparing the liquid mixture.. The mixture (1 kg) was aerated using a benchscale Kenwood Chef mixer to an overrun of about 100%, followed by 1 minute additional mixing to achieve a finer foam texture.

Mixture AI1 was prepared as AA14, with the exception that prior to aeration the mix was homogenised using a high pressure homogeniser (Niro Soave) at a pressure of 150 bar. Mixture 9075 was prepared as 9069, with the exception that prior to aeration the mix was homogenised in two stages using a high pressure homogeniser at pressures of 270 and 30 bar.

After preparation the aerated compositions were stored at 5°C to evaluate stability of the foams as in example 3.

*Table 6 Results of visual assessment of foam stability of samples in Table 5.*

| sample | storage period [days] | overrun stability | bubble growth | phase separation (bubbles) | phase separation (serum) |
|---|---|---|---|---|---|
| 9069 | 17 | good | good | good | good |
| | 59 | good | moderate | good | good |
| 9074 | 14 | good | good | good | good |
| | 58 | good | moderate | good | good |
| AD7 | 17 | good | good | good | good |
| AD6 | 55 | good | moderate | good | good |
| 9075 | 58 | good | moderate | good | good |
| AA14 | 8 | bad | bad | bad | bad |
| AB2 | 14 | bad | bad | moderate | moderate |
| AI1 | 29 | good | good | good | good |

This shows that using citric acid ester in combination with the specified sugars mix, aerated liquid compositions can be prepared which are stable during at least 2 weeks on the 4 assessed aspects. During a period of 58 days the foams mainly remain stable, although some of the compositions show some bubble coarsening. Nevertheless, the mixtures are still of acceptable quality in such case. Product Al1 which has been additionally homogenised shows a high stability. These products can be stored and quiescently frozen to provide good quality frozen confections.

**Example 6. Aerated liquid compositions with organic acid esters.**

Aerated liquid compositions were prepared having compositions as in Table 7.

*Table 7 Formulation of liquid compositions.*

|  | Lactem P 22 [wt%] | Acetem 50 [wt%] | Acetem 50 [wt%] | Citrem [wt%] |
|---|---|---|---|---|
| Skimmed milk powder | 5.61 | 5.61 | 5.61 | 5.61 |
| Coconut oil | 5 | 5 | 5 | 5 |
| Dextrose monohydrate | 12 | 12 | 12 | 12 |
| Sucrose | 6.4 | 6.4 | 6.4 | 6.4 |
| Glucose syrup 28DE | 5.5 | 5.5 | 5.5 | 5.5 |
| Glucose syrup 40DE | 10.6 | 10.6 | 10.6 | 10.6 |
| Xanthan gum | 0.4 | 0.4 | 0.4 | 0.4 |
| Lactem | 1.0 |  |  |  |
| Acetem 50-00 |  | 1.0 |  |  |
| Acetem 70-00 |  |  | 1.0 |  |
| Citrem N12 |  |  |  | 1.0 |
| Water | to 100% | to 100% | to 100% | to 100% |

Examples were made at benchscale. The water was heated to 80°C. Dry ingredients (sucrose, dextrose, SMP, xanthan ) were added to the water which was stirred using a Silverson overhead mixer fitted with a fine emulsion screen. This was immediately followed with the addition of the coconut oil, acid ester and corn syrups to the mixture. This was then stirred for 10 minutes ensuring all the ingredients were hydrated. The mix was then reheated to 80°C in the microwave before being cooled under shear to 5°C in a metal container partially submerged in an ice bath. This was then left at 5°C for 20 hours before being aerated using a Kenwood Chef mixer at 5°C to an overrun of about 100%, followed by 1 minute additional mixing to achieve a finer foam texture.

After aeration the foams were visually assessed on stability of the foams during storage at a temperature of 5°C, with the same criteria as in example 3. The scores of the samples were the following:

*Table 8 Results of visual assessment of foam stability of samples in Table 7.*

| sample | storage period [days] | overrun stability | bubble growth | phase separation (bubbles) | phase separation (serum) |
|---|---|---|---|---|---|
| Acetem 50-00 | 14 | good | good | good | good |
| Acetem 50-00 | 19 | moderate | good | good | good |
| Acetem 70-00 | 14 | good | good | good | good |
| Acetem 70-00 | 19 | good | good | good | good |
| Lactem | 14 | good | moderate | good | good |
| Lactem | 19 | good | moderate | good | good |

This shows that using various types of organic acid esters, stable foams can be made, which are suitable to be frozen.

**Example 7** - **Preparation of dried composition and comparison of rehydrated dried composition against liquid composition**

In order to demonstrate the acceptability of the rehydrated dried composition the following formulation was provided. Vanilla Flavour was from Symrise AG, Germany.

| Ingredients | Weight (%) |
|---|---|
| Water | 53.082 |
| SMP | 5.62 |
| Coconut Oil | 5 |
| Sucrose | 6.4 |
| Dextrose monohydrate (02001) | 12 |
| Dried Glucose 28DE | 5.5 |
| Dried Glucose 40DE | 10.6 |
| Citrus Fibre | 0.4 |
| Guar gum | 0.2 |
| CITREM | 1 |
| Vanilla Flavour (Material # 693901) | 0.148 |
| Vanilla Flavour (Material # 238944) | 0.05 |
| Total | 100 |
| | |
| Total solids | 44.96 |
| Average Number Molecular weight of sugars | 297g/mole |

The ingredients were mixed with water in a mixing tank, in a pre-determined order and at the specified temperatures, in a manner similar to that used when preparing the liquid format product. After mixing the mix was homogenised (270/30 bar) and pasteurised (120°C, 4 mins) and then sent, via a high pressure pump (300-350 bar), to the spray drying tower at a flow-rate of 40-45 litres/hour. The Air Inlet Temperature was 112°C and the Outlet Temperature was 60-63°C. The spray dried product was collected at the non-agglomerated stage of the process.

250g of spray dried ice cream powder was added to 250g of chilled (approx. +5°C) water and stirred thoroughly until all the powder was dispersed. The mixture was either whisked immediately (Sample B) or, alternatively, left to stand overnight in chill (approx. +5°C) before whisking the following day (Sample C). The mixture was whisked using an electric hand whisk on maximum speed for a few minutes until the mixture was of a thick creamy consistency such that peaks could be formed. A control sample (Sample A) of ice cream was prepared by taking 500g of the liquid formulation that had been stored at chill and whisking it with an electric hand whisk on maximum speed until the overrun was of a similar value to that achieved with the spray dried products.

Samples were taken for an overrun measurement and then the mixes were transferred to plastic tubs, a lid fitted and the tubs placed in a freezer to freeze overnight (approx. -18°C).

The overruns recorded were: Sample A (Control, liquid product) 157%; Sample B (Spray dried product; whisked immediately) 176%; Sample C (Spray dried product; whisked after standing overnight) 161%.

A competent tasting panel of seven people compared Samples B and C to sample A on the following criteria:

- Finish (Shine)
- Colour intensity (white)
- Firmness to spoon
- Chewiness
- Iceness

- Initial Smoothness
- Coldness
- Slipperiness
- Rate of melt
- Oily Residue
- Aeration
- Final Smoothness
- Overall flavour intensity
- Sweetness
- Off notes

A score of 0 means that Sample B or C scored the same as Control Sample A. A score of less than 0 means that the competent tasting panel deemed Sample B or C to be lower than sample A on a given attribute. A score of more than 0 means that the competent tasting panel deemed Samples B and C to be higher than sample A on a given attribute.

The results are shown in the following table:

| Attribute | Control vs. Sample B | | Control vs. Sample C | |
|---|---|---|---|---|
| | Average | Stdev | Average | Stdev |
| Finish (Shine) | 0.714286 | 0.755929 | 1 | 0.816497 |
| Colour intensity (white) | 1.857143 | 0.899735 | 2 | 0.57735 |
| Firmness to spoon | -1.71429 | 0.48795 | -1.28571 | 0.755929 |
| Chewiness | 0.142857 | 1.573592 | 0.428571 | 2.149197 |
| Iceness | -1.71429 | 1.112697 | -2.57143 | 0.786796 |
| Initial Smoothness | 1.142857 | 1.46385 | 1.857143 | 0.690066 |
| Coldness | -0.57143 | 1.511858 | -0.85714 | 1.772811 |
| Slipperiness | 1.285714 | 0.95119 | 1.714286 | 0.755929 |
| Rate of melt | 0.857143 | 1.573592 | -0.14286 | 1.345185 |
| Oily Residue | 0.285714 | 1.380131 | 0.714286 | 0.95119 |
| Aeration | 1.571429 | 0.9759 | 1.571429 | 0.9759 |
| Final Smoothness | 1.142857 | 1.46385 | 1.714286 | 0.755929 |
| Overall flavour intensity | 1.142857 | 1.345185 | 0.714286 | 1.603567 |
| Sweetness | 1.142857 | 1.46385 | 1.142857 | 0.899735 |
| Off notes | 0.285714 | 0.95119 | 0.285714 | 0.48795 |

It can therefore be readily appreciated that the frozen aerated confections of Samples B & C (prepared from the dried powder) were equivalent to the frozen aerated confections of Sample A (prepared from the liquid composition). In fact, Samples B & C were actually found to be superior in terms of better finish; better whiteness; ease of spooning; reduced iceness; improved initial smoothness; reduced coldness; enhanced slipperiness; better perception of aeration/mousse-like qualities; better final smoothness; better overall flavour intensity; and better sweetness. In addition the off notes were only very slightly higher than the control.

**Claims**

1. A composition in liquid form comprising water;

oil at a concentration ranging from 0.5% to 8% by weight, preferably from 1% to 6% by weight;
milk protein at a concentration ranging from 0.9% to 2.5% by weight; one or more compounds selected from monosaccharides, disaccharides, and oligosaccharides, at a concentration ranging from 32% to 40% by weight, and wherein a mixture of the one or more compounds selected from monosaccharides, disaccharides, and oligosaccharides has a number average molecular weight <M>n ranging from 240 to 350 gram per mole; and comprising one or more hydrocolloids to provide an apparent yield stress of at least 1 Pa; and one or more emulsifiers comprising organic acid esters of mono- and diglycerides of fatty acids; and total solids at a concentration ranging from 30% to 50% by weight.

**2.** A composition according to claim 1, wherein the mixture of the one or more compounds selected from monosaccharides, disaccharides, and oligosaccharides has a number average molecular weight <M>n ranging from 250 to 350 gram per mole, preferably from 270 to 340 gram per mole, preferably from 290 to 330 gram per mole.

**3.** A composition according to claim 1 or 2, wherein the relative sweetness of the mixture of the one or more compounds selected from monosaccharides, disaccharides, and oligosaccharides, is maximally 0.22, preferably maximally 0.2, preferably maximally 0.18.

**4.** A composition according to any of claims 1 to 3, wherein the one or more hydrocolloids to provide an apparent yield stress of at least 1 Pa is selected from xanthan gum, carrageenan, guar gum, locust bean gum, tara gum, alginate, pectin, and carboxy-methylcellulose, and from any combination of these.

**5.** A composition according to any of claims 1 to 4, wherein the organic acid esters of mono- and diglycerides of fatty acids comprise one or more compounds selected from the group consisting of acetic acid esters of mono- and diglycerides of fatty acids; and lactic acid esters of mono- and diglycerides of fatty acids; and citric acid esters of mono- and diglycerides of fatty acids; and tartaric acid esters of mono- and diglycerides of fatty acids.

**6.** A composition according to any of claims 1 to 5, containing gas bubbles at an overrun ranging from 30% to 200%.

**7.** A composition according to claim 6, wherein the gas bubbles have an average diameter D4,3 ranging from 5 to 100 micrometer.

**8.** A composition according to claim 6 or 7, wherein the composition is packaged in a closed package.

**9.** A composition according to any of claims 1 to 8, wherein the composition is at a temperature of 0°C or higher, preferably at a temperature of maximally 40°C, preferably maximally 35°C.

**10.** A composition according to any of claims 6 to 8, wherein the composition is at a temperature below 0°C, preferably below -5°C, preferably between -10°C and -25°C.

**11.** A composition according to claim 10, wherein the ice content ranges from 30% to 40% by weight at -18°C, preferably from 32% to 39% by weight.

**12.** A method for preparation of a frozen aerated composition, wherein a composition according to any of claims 6 to 8 is brought to a temperature below 0°C, preferably below -5°C, preferably between -10°C and -25°C.

**13.** A method according to claim 12, wherein the composition is not agitated when brought to a temperature below 0°C, preferably below -5°C, preferably between -10°C and -25°C.

**14.** A composition according to any of claims 1 to 5 wherein the water has been removed to provide a water content of less than 10 % by weight.

**15.** A composition according to claim 14 wherein the composition is in the form of a powder.

**Patentansprüche**

**1.** Zusammensetzung in flüssiger Form, umfassend Wasser;

Öl in einer Konzentration im Bereich von 0,5 bis 8 Gewichts-%, bevorzugt von 1 bis 6 Gewichts-%; Milchprotein in einer Konzentration im Bereich von 0,9 bis 2,5 Gewichts-%; eine oder mehrere Verbindungen, ausgewählt aus Monosacchariden, Disacchariden und Oligosacchariden, in einer Konzentration im Bereich von 32 bis 40 Gewichts-% und

wobei eine Mischung der einen oder mehreren Verbindungen, ausgewählt aus Monosacchariden, Disacchariden und Oligosacchariden, ein Zahlenmittel des Molekulargewichts $<M>n$ im Bereich von 240 bis 350 Gramm pro Mol aufweist; und

umfassend ein oder mehrere Hydrokolloide, um eine scheinbare Fließspannung von mindestens 1 Pa bereitzustellen; und

einen oder mehrere Emulgatoren, die organische Säureester von Mono- und Diglyceriden von Fettsäuren umfassen; und

Gesamtfeststoffe in einer Konzentration im Bereich von 30 bis 50 Gewichts-%.

2. Zusammensetzung nach Anspruch 1, wobei die Mischung der einen oder mehreren Verbindungen, ausgewählt aus Monosacchariden, Disacchariden und Oligosacchariden, ein Zahlenmittel des Molekulargewichts $<M>n$ im Bereich von 250 bis 350 Gramm pro Mol, bevorzugt von 270 bis 340 Gramm pro Mol, bevorzugt von 290 bis 330 Gramm pro Mol, aufweist.

3. Zusammensetzung nach Anspruch 1 oder 2, wobei die relative Süßkraft der Mischung der einen oder mehreren Verbindungen, ausgewählt aus Monosacchariden, Disacchariden und Oligosacchariden, maximal 0,22, bevorzugt maximal 0,2, bevorzugt maximal 0,18, beträgt.

4. Zusammensetzung nach einem der Ansprüche 1 bis 3, wobei das eine oder die mehreren Hydrokolloide zur Bereitstellung einer scheinbaren Fließspannung von mindestens 1 Pa aus Xanthangummi, Carrageen, Guargummi, Johannisbrotkernmehl, Taragummi, Alginat, Pektin und Carboxymethylcellulose und aus einer beliebigen Kombination von diesen ausgewählt sind.

5. Zusammensetzung nach irgendeinem der Ansprüche 1 bis 4, wobei die organischen Säureester von Mono- und Diglyceriden von Fettsäuren eine oder mehrere Verbindungen umfassen, die ausgewählt sind aus der Gruppe bestehend aus

Essigsäureestern von Mono- und Diglyceriden von Fettsäuren; und Milchsäureestern von Mono- und Diglyceriden von Fettsäuren; und Citronensäureestern von Mono- und Diglyceriden von Fettsäuren; und Weinsäureestern von Mono- und Diglyceriden von Fettsäuren.

6. Zusammensetzung nach irgendeinem der Ansprüche 1 bis 5, enthaltend Gasblasen mit einem Luftaufschlag im Bereich von 30 % bis 200 %.

7. Zusammensetzung nach Anspruch 6, wobei die Gasblasen einen durchschnittlichen Durchmesser $D4,3$ im Bereich von 5 bis 100 Mikrometer aufweisen.

8. Zusammensetzung nach Anspruch 6 oder 7, wobei die Zusammensetzung in einer geschlossenen Packung verpackt ist.

9. Zusammensetzung nach irgendeinem der Ansprüche 1 bis 8, wobei die Zusammensetzung bei einer Temperatur von 0 °C oder höher, bevorzugt bei einer Temperatur von maximal 40 °C, bevorzugt maximal 35 °C, vorliegt.

10. Zusammensetzung nach irgendeinem der Ansprüche 6 bis 8, wobei die Zusammensetzung bei einer Temperatur unter 0 °C, bevorzugt unter -5 °C, bevorzugt zwischen -10 °C und -25 °C, vorliegt.

11. Zusammensetzung nach Anspruch 10, wobei der Eisgehalt im Bereich von 30 bis 40 Gewichts-% bei -18 °C vorliegt, bevorzugt von 32 bis 39 Gewichts-%.

12. Verfahren zur Herstellung einer gefrorenen lufthaltigen Zusammensetzung, wobei eine Zusammensetzung nach irgendeinem der Ansprüche 6 bis 8 auf eine Temperatur unter 0 °C, bevorzugt unter -5 °C, bevorzugt zwischen -10 °C und -25 °C, gebracht wird.

13. Verfahren nach Anspruch 12, wobei die Zusammensetzung nicht gerührt wird, wenn sie auf eine Temperatur unter 0 °C, bevorzugt unter -5 °C, bevorzugt zwischen -10 °C und -25 °C, gebracht wird.

14. Zusammensetzung nach irgendeinem der Ansprüche 1 bis 5, wobei das Wasser entfernt wurde, um einen Wassergehalt von weniger als 10 Gewichts-% bereitzustellen.

**15.** Zusammensetzung nach Anspruch 14, wobei die Zusammensetzung in Form eines Pulvers vorliegt.

**Revendications**

**1.** Composition dans une forme liquide comprenant de l'eau ; de l'huile à une concentration de 0,5 % à 8 % en masse ; de préférence de 1 % en masse à 6 % en masse ;

une protéine de lait à une concentration de 0,9 % à 2,5 % en masse ;
un ou plusieurs composés choisis parmi des monosaccharides, disaccharides, et oligosaccharides, à une concentration de 32 % à 40 % en masse, et
dans laquelle un mélange des un ou plusieurs composés choisis parmi des monosaccharides, disaccharides, et oligosaccharides présente une masse moléculaire moyenne en nombre <M>n de 240 à 350 grammes par mole ; et
comprenant un ou plusieurs hydrocolloïdes pour fournir une limite apparente d'élasticité d'au moins 1 Pa ; et
un ou plusieurs émulsifiants comprenant des esters d'acides organiques de mono- et diglycérides d'acides gras ; et
un total de solides à une concentration de 30 % à 50 % en masse.

**2.** Composition selon la revendication 1, dans laquelle le mélange des un ou plusieurs composés choisis parmi des monosaccharides, disaccharides, oligosaccharides présente une masse moléculaire moyenne en nombre <M>n de 250 à 350 grammes par mole, de préférence de 270 à 340 grammes par mole, de préférence de 290 à 330 grammes par mole.

**3.** Composition selon la revendication 1 ou 2, dans laquelle le pouvoir sucrant relatif du mélange des un ou plusieurs composés choisis parmi des monosaccharides, disaccharides, et oligosaccharides, est au maximum de 0,22, de préférence au maximum de 0,2, de préférence au maximum de 0,18.

**4.** Composition selon l'une quelconque des revendications 1 à 3, dans laquelle les un ou plusieurs hydrocolloïdes pour fournir une limite apparente d'élasticité d'au moins 1 Pa sont choisis parmi gomme xanthane, carraghénane, gomme guar, gomme de caroube, gomme de tara, alginate, pectine, et carboxy-méthylcellulose, et toute combinaison de ceux-ci.

**5.** Composition selon l'une quelconque des revendications 1 à 4, dans laquelle les esters d'acides oragniques de mono- et diglycérides d'acides gras comprennent un ou plusieurs composés choisis dans le groupe consistant en

esters d'acide acétique de mono- et diglycérides d'acides gras ; et
esters d'acide lactique de mono- et diglycérides d'acides gras ; et
esters d'acide citrique de mono- et diglycérides d'acides gras ; et
esters d'acide tartarique de mono- et diglycérides d'acides gras.

**6.** Composition selon l'une quelconque des revendications 1 à 5, contenant des bulles de gaz à un dépassement de 30 % à 200 %.

**7.** Composition selon la revendication 6, dans laquelle les bulles de gaz présentent un diamètre moyen D4,3 de 5 à 100 micromètres.

**8.** Composition selon la revendication 6 ou 7, dans laquelle la composition est emballée dans un emballage fermé.

**9.** Composition selon l'une quelconque des revendications 1 à 8, dans laquelle la composition est à une température de 0°C ou supérieure, de préférence à une température de maximum 40°C, de préférence de maximum 35°C.

**10.** Composition selon la revendication 1 à 8, dans laquelle la composition est à une température inférieure à 0°C, de préférence inférieure à -5°C, de préférence de -10°C à -25°C.

**11.** Composition selon la revendication 10, dans laquelle la teneur en glace est de 30 % à 40 % en masse à -18°C, de préférence de 32 % à 39 % en masse.

**12.** Procédé pour la préparation d'une composition aérée congelée, dans lequel une composition selon l'une quelconque des revendications 6 à 8 est amenée à une température inférieure à 0°C, de préférence inférieure à -5°C, de préférence de -10°C à -25°C.

**13.** Procédé selon la revendication 12, dans lequel la composition n'est pas agitée lorsque amenée à une température inférieure à 0°C, de préférence inférieure à -5°C, de préférence de -10°C à -25°C.

**14.** Composition selon l'une quelconque des revendications 1 à 5, dans laquelle l'eau a été éliminée pour fournir une teneur en eau inférieure à 10 % en masse.

**15.** Composition selon la revendication 14, dans laquelle la composition est dans la forme d'une poudre.

**Figure 1**

**Figure 2**

**Figure 3**

**Figure 4**

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012110376 A1
- WO 2014029574 A1
- WO 2008009616 A2
- WO 2008009617 A1
- WO 2008009618 A2
- WO 2008009623 A1
- WO 2012016852 A2
- WO 9823169 A
- ZA 9810254
- WO 2008019865 A1
- EP 1676486 A1
- WO 2007039064 A1
- WO 2012110376 A
- WO 2012016852 A

**Non-patent literature cited in the description**

- **J. CHIRIFE et al.** *Journal of Food Engineering,* 1997, vol. 33, 221-226
- **GOUDAPPEL et al.** *Journal of Colloid and Interface Science,* 2001, vol. 239, 535-542